# EUROPEAN PATENT APPLICATION

(11) **EP 4 354 005 A1**
(43) Date of publication of application: **17.04.2024**
(21) Application number: 22819323.1
(22) Date of filing: 19.05.2022
(51) Int. Cl.: F16L 19/06, F16L 19/07, F16B 23/00, F16B 41/00

(54) **REMOVAL-PREVENTION CONNECTOR**

(30) Priority: 11.06.2021 CN 202121316730 U
(71) Applicant: Zhejiang Dunan Artificial Environment Co., Ltd., Shaoxing, Zhejiang 311835 (CN)
(72) Inventor: FENG, Zhongbo, Shaoxing, Zhejiang 311835 (CN); LOU, Feng, Shaoxing, Zhejiang 311835 (CN); PENG, Meiling, Shaoxing, Zhejiang 311835 (CN); CHEN, Diyong, Shaoxing, Zhejiang 311835 (CN); ZHOU, Feng, Shaoxing, Zhejiang 311835 (CN)
(74) Representative: Inchingalo, Simona
(86) International application number: PCT/CN2022/093981
(87) International publication number: WO 2022/257725

(57) **Abstract**

An anti-disassembly connector, including: a connecting portion (10); and at least two bosses (20), where the bosses (20) protrude from an end or a peripheral wall of the connecting portion (10), the bosses (20) extend along a circumferential edge of the connecting portion (10), each of the bosses (20) has a force-bearing surface (21) and a force-releasing surface (22) that are disposed opposite to each other, and two bosses (20) are disposed at intervals along the circumferential edge of the connecting portion (10) or the peripheral wall of the connecting portion (10); and a force-bearing sideline (211) is formed on a side of the force-bearing surface (21) away from the connecting portion (10), a distance between force-bearing sidelines (211) of the two bosses (20) is clamping distance L, an outer diameter of each of the at least two bosses has D, and L < D.

## Description

### Cross-Reference to Related Application

The disclosure claims the priority of Chinese Patent Application No. 202121316730.4, filed on June 11, 2021 and entitled "Anti-disassembly connector", the contents of which are hereby incorporated by reference in its entirety.

### Technical Field

The disclosure relates to the technical field of stop valves, and particularly relates to an anti-disassembly connector.

### Background

At present, it is generally required to match and connect a pipe joint to a joint nut in order to weld an evaporator to a connecting pipe of an air conditioner in the art known to inventors, so as to facilitate rapid installation. However, the joint nut is likely to be disassembled from the pipe joint if misoperation occurs in a process of use, cleaning or maintenance, which causes leakage of a pipeline.

### Summary

A main objective of the disclosure is to provide an anti-disassembly connector, so as solve the technical problem that a pipe joint is easily disassembled in the art known to inventors.

In order to realize the above objective, the disclosure provides an anti-disassembly connector. The anti-disassembly connector includes: a connecting portion; and bosses, where the bosses protrude from an end of the connecting portion or a peripheral wall of the connecting portion, the bosses extend along a circumferential edge of the connecting portion or the peripheral wall of the connecting portion, each of the bosses has a force-bearing surface and a force-releasing surface that are disposed opposite to each other, at least two bosses are provided, and two bosses are disposed along the circumferential edge of the connecting portion or the peripheral wall of the connecting portion; and a force-bearing sideline is formed on a side of the force-bearing surface away from the connecting portion, a distance between force-bearing sidelines of the two bosses is clamping distance L, an outer diameter of each of the bosses is D, and L < D.

In some embodiments, the force-bearing sideline is parallel to an axis of the connecting portion.

In some embodiments, a distance between force-bearing sidelines of two adjacent bosses is clamping distance L, a sleeve has an outer diameter of D, and L < D.

In some embodiments, two bosses are provided, and the two bosses are symmetrically disposed at the end of the connecting portion or the peripheral wall of the connecting portion.

In some embodiments, each of the bosses has a height of h, and 5 mm ≤ h ≤ 20 mm.

In some embodiments, the force-bearing surface is parallel to an axis of the connecting portion.

In some embodiments, the force-releasing surface is an inclined surface or a curved surface.

In some embodiments, the force-releasing surface is disposed along the circumferential edge of the connecting portion or the peripheral wall of the connecting portion, a central angle corresponding to the force-releasing surface is α, and 40° ≤ α ≤ 180°.

In some embodiments, each of the bosses includes a first protruding section and a second protruding section that are connected with each other, the force-bearing surface is formed on a side of the first protruding section away from the second protruding section, and the force-releasing surface is formed on a side of the second protruding section away from the first protruding section; and the first protruding section extends along the circumferential edge of the connecting portion or the peripheral wall of the connecting portion, an angle corresponding to the first protruding section is β, and 0° ≤ β ≤ 140°.

In some embodiments, the connecting portion and the bosses are integrally formed; or the bosses are fixed to the connecting portion.

In some embodiments, the force-bearing surfaces and the force-releasing surfaces are alternately disposed in a circumferential direction of an end face of the connecting portion or the peripheral wall of the connecting portion.

In some embodiments, an anti-disassembly connector is provided. The anti-disassembly connector includes: a connecting portion; and boss, where the boss protrudes from an end of the connecting portion or a peripheral wall of the connecting portion, the boss extends along a circumferential edge of the connecting portion or the peripheral wall of the connecting portion, the boss has a force-bearing surface and a force-releasing surface that are disposed opposite to each other, at least one boss is provided, and a gap between the boss and the peripheral wall of the connecting portion forms a clamping interval; and a force-bearing sideline is formed on a side of the force-bearing surface away from an inner wall of the connecting portion, a clamping distance between the force-bearing sideline and an outer edge of the boss is L, an outer diameter of the boss is D, and L < D.

By employing the technical solution of the disclosure, when an operating tool performs a tightening operation, the operating tool acts on and clamps or jams two force-bearing sidelines. Since L < D, the clamping distance can be reduced to be less than a diameter of a nut such that clamping and screwing can be convenient, and convenience of operation is improved. When reverse operation is carried out on the force-bearing sidelines, the operating tool will be deviated from the two force-bearing sidelines such that disassembly cannot be achieved. Therefore, the technical problem that a pipe joint is easily disassembled due to misoperation in the art known to inventors can be solved through the technical solution of the disclosure.

### Brief Description of the Drawings

Accompanying drawings of the description serve as a constituent part of the disclosure to provide a further understanding of the disclosure. Examples of the disclosure and their descriptions serve to explain the disclosure, and are not to be construed as unduly limiting the disclosure. In figures:
Fig. 1 shows a schematic structural diagram of an anti-disassembly connector according to the disclosure;
Fig. 2 shows a front view of an anti-disassembly connector according to the disclosure;
Fig. 3 shows a top view of an anti-disassembly connector according to the disclosure;
Fig. 4 shows a schematic diagram of a mounting structure of an anti-disassembly connector according to the disclosure;
Fig. 5 shows a front view of a mounting structure of an anti-disassembly connector according to the disclosure; and
Fig. 6 shows a sectional view of a mounting structure of an anti-disassembly connector according to the disclosure.

The above figures include reference numerals as follows:
10. connecting portion, 20. boss, 21. force-bearing surface, 211. force-bearing sideline, 22. force-releasing surface, 23. first protruding section, 24. second protruding section, 30. connector, and 40. connecting pipe.

### Detailed Description of the Embodiments

It should be noted that examples of the disclosure and features in the examples can be combined with one another if there is no conflict. The disclosure will be described in detail below with reference to accompanying drawings and in combination with examples.

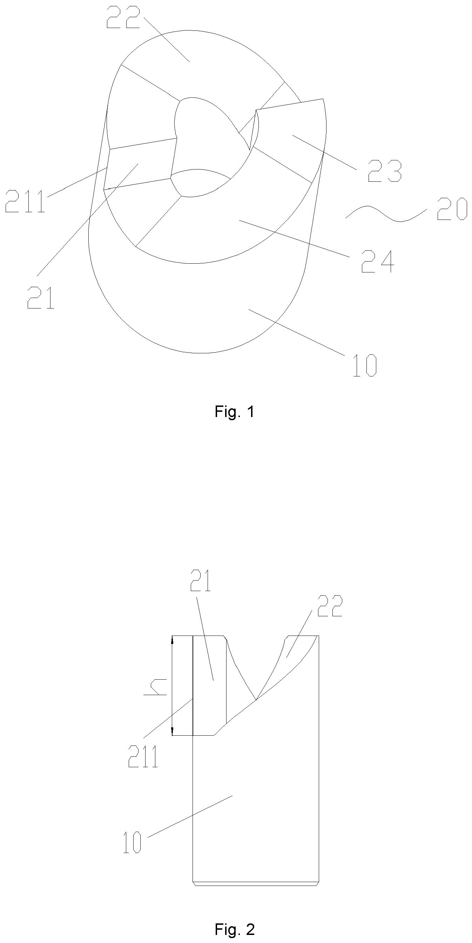

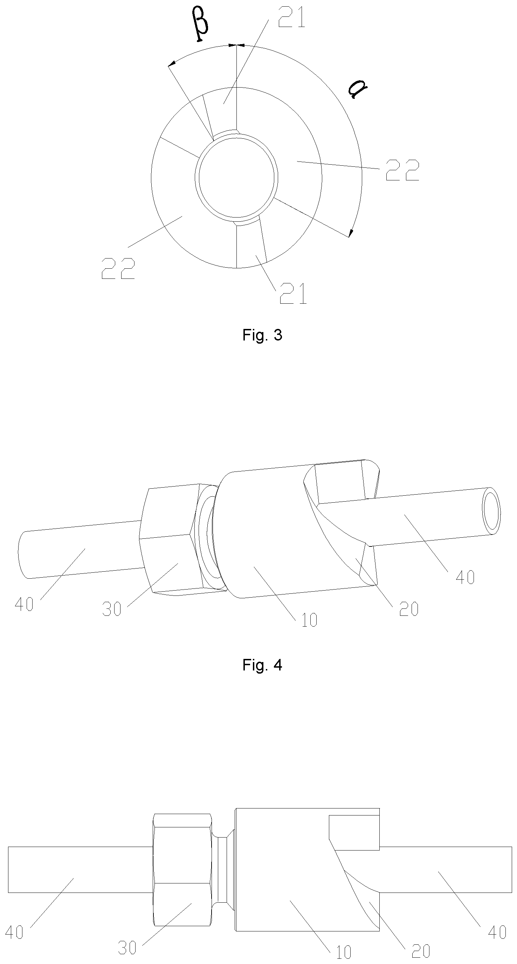

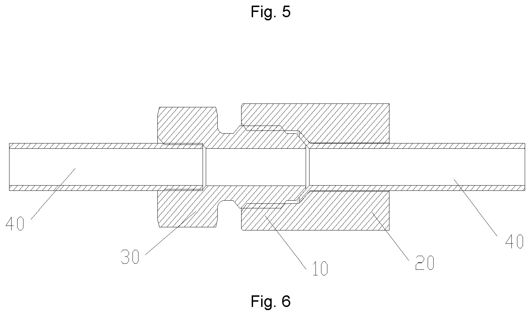

As shown in Figs. 1-6, the disclosure provides an anti-disassembly connector. The anti-disassembly connector includes a connecting portion 10 and bosses 20, and a threaded connecting section is disposed on an inner wall of the connecting portion 10. The bosses 20 protrude from an end of the connecting portion 10, the bosses 20 extend along a circumferential edge of the connecting portion 10, each of the bosses 20 has a force-bearing surface 21 and a force-releasing surface 22 that are disposed opposite to each other, at least two bosses 20 are provided, two bosses 20 are disposed at intervals along the circumferential edge of the connecting portion 10, and a gap between two bosses 20 (in some embodiments, the two bosses 20 are two adjacent bosses 20) forms a clamping interval. A force-bearing sideline 211 is formed on a side of the force-bearing surface 21 away from an inner wall of the connecting portion 10. In some embodiments, a distance between force-bearing sidelines 211 of two adjacent bosses 20 is clamping distance L, an outer diameter of each of the bosses 20 is D, and L < D. In some embodiments, an outer wall of each of the bosses 20 is of an arc structure or an approximately-arc structure, and the outer diameter of each of the bosses 20 refers to a diameter corresponding to a circle in which the outer wall of each of the bosses is located.

It should be noted that the circumferential edge of the connecting portion 10 refers to a circumferential edge of an end of the connecting portion 10, and the peripheral wall of the connecting portion 10 refers to a side wall of the connecting portion 10.

Through such structure arrangement, the clamping distance can be reduced to be less than a diameter of a nut such that clamping and screwing can be convenient, and convenience of operation is improved.

In some embodiments, the force-bearing sideline 211 is parallel to an axis of the connecting portion 10. In some embodiments, the anti-disassembly connector is an anti-disassembly nut or joint. In a case that the anti-disassembly connector is an anti-disassembly nut, the connecting portion 10 is a pipe body, and an internal thread is provided on an inner wall of the pipe body.

By means of the anti-disassembly connector provided in some embodiments, an operating tool acts on the force-bearing surface 21 during specific operation such that the anti-disassembly connector can be in threaded connection with a connector 30. After the anti-disassembly connector is installed on the connector 30, if the operating tool acts on the force-bearing surface 21, only an anti-disassembly connector can be screwed with the connector 30. If the operating tool acts on the force-releasing surface 22, a force acting on the force-releasing surface 22 cannot act on the connecting portion 10 such that the connecting portion 10 cannot be smoothly disassembled by means of the operating tool, and an anti-disassembly function can be effectively achieved. In some embodiments, in a case that the operating tool is a special tool, the operating tool leans against the force-bearing surface 21 to apply a force to the force-bearing surface 21 such that the anti-disassembly connector can be screwed. When the operating tool reversely operates to act on the force-releasing surface 22, the operating tool is deviated from the anti-disassembly connector along the force-releasing surface such that the anti-disassembly connector cannot be disassembled. In a case that the operating tool is an adjustable spanner, when the operating tool performs a tightening operation, the operating tool (in some embodiments, the operating tool is an adjustable spanner) acts on and clamps the two force-bearing sidelines 211, and the force-bearing sideline 211 is parallel to the axis of the connecting portion 10 such that the connecting portion 10 can be conveniently screwed, jamming during screwing can be avoided, and convenience of operation can be improved. When reverse operation is carried out on the force-bearing sidelines 211, the operating tool will be deviated from the two force-bearing sidelines 211 such that disassembly cannot be achieved. Therefore, the technical problem that a pipe joint is easily disassembled due to misoperation in the art known to inventors can be solved by means of the anti-disassembly connector in some embodiments.

In some embodiments, two bosses 20 are provided, and the two bosses 20 are symmetrically disposed at the end of the connecting portion 10 or the peripheral wall of the connecting portion 10. Through such structure arrangement, a structure layout is optimized, compactness of structure arrangement is improved, and operation is convenient.

In some embodiments, a height of each of the bosses 20 is h, 5 mm ≤ h ≤ 20 mm, and the height of each of the bosses 20 is the highest height of each of the bosses 20. In a case that each of the bosses 20 has a height less than 5 mm, since the height of each of the bosses 20 is too small, the operating tool cannot conveniently carry out clamping, screwing cannot be facilitated, and a spanner cannot effectively apply a force. In a case that each of the bosses 20 has a height greater than 20 mm, the bosses 20 occupy much space, and therefore, structural space is wasted, and counterclockwise disassembly is occurred.

In some embodiments, the force-bearing surface 21 is parallel to the axis of the connecting portion 10, such that screwing is convenient.

In some embodiments, the force-releasing surface 22 is an inclined surface or a curved surface, as long as it is ensured that the height of the force-releasing surface 22 is gradually changed such that an external force cannot be applied to the force-releasing surface 22. Through such structure arrangement, the structure is simple, production and manufacture are convenient, and a force-releasing function can be effectively achieved.

In some embodiments, the force-releasing surface 22 is disposed along the circumferential edge of the connecting portion 10 or the peripheral wall of the connecting portion 10, a central angle corresponding to the force-releasing surface 22 is α, and 40° ≤ α ≤ 180°. Within such an angle range, a force-releasing function can be effectively achieved, and an anti-disassembly function can be achieved. In some embodiments, the greater α is, the less a slope of the curved surface or inclined surface is, and the better anti-disassembly performance is. However, if α is excessively great, the force-releasing surface 22 will occupy too much space, and it is inconvenient to arrange two or more bosses 20. In some embodiments, 100° ≤ α ≤ 130°.

In some embodiments, each of the bosses 20 includes a first protruding section 23 and a second protruding section 24 that are connected with each other, the force-bearing surface 21 is formed on a side of the first protruding section 23 away from the second protruding section 24, and the force-releasing surface 22 is formed on a side of the second protruding section 24 away from the first protruding section 23. The first protruding section 23 extends along the circumferential edge of the connecting portion 10 or the peripheral wall of the connecting portion 10, an angle corresponding to the first protruding section 23 is β (that is, a central angle corresponding to a circle in which the first protruding section 23 is located is β), and 0° ≤ β ≤ 140°. In some embodiments, in a case that β is 0°, the first protruding section 23 is merely of a force-bearing surface 21 structure. In a case that β is greater than 0°, the first protruding section 23 is of a block structure. In some embodiments, the first protruding section is of an equal-height block structure, such that production is convenient. In some embodiments, in a case that the nut has a relatively great diameter, and each of the bosses 20 has enough strength, β is 0°.

In some embodiments, the connecting portion 10 and the bosses 20 are integrally formed such that mounting operations can be reduced. Alternatively, the bosses 20 are welded to the connecting portion 10 such that boss 20 structures having different structures and sizes can be conveniently produced according to actual conditions.

In some embodiments, the force-bearing surfaces 21 and the force-releasing surfaces 22 are alternately disposed in a circumferential direction of an end face of the connecting portion 10 such that screwing can be convenient, and an anti-disassembly function can be effectively achieved.

When the anti-disassembly connector provided in some embodiments is used, a spanner jams the two force-bearing sidelines 211 on the bosses 20 and transmits a force to the connecting portion 10 by means of the force-bearing sidelines 211 such that closing and sealing can be achieved. When operating counterclockwise, the spanner will be deviated from the two force-bearing sidelines 211, and no force can be applied to the connecting portion 10 counterclockwise such that an anti-disassembly function can be achieved. The anti-disassembly connector provided in some embodiments can only be forcibly disassembled by means of a pipe spanner when in use.

In some embodiments, an external thread structure is arranged on the connector 30, and the anti-disassembly connector is connected to the connector 30. Both the anti-disassembly connector and the connector 30 are connected to connecting pipes 40 such that the connecting pipe 40 connected to the connector 30 can be in communication with the connecting pipe 40 connected to the anti-disassembly connector.

In some embodiments, an anti-disassembly connector is provided. The anti-disassembly connector includes: a connecting portion 10; and boss 20, where the boss 20 protrudes from an end of the connecting portion 10 or a peripheral wall of the connecting portion 10, the boss 20 extends along a circumferential edge of the connecting portion 10 or the peripheral wall of the connecting portion 10, the boss 20 has a force-bearing surface 21 and a force-releasing surface 22 that are disposed opposite to each other, at least one boss 20 is provided, and a gap between the boss 20 and the peripheral wall of the connecting portion 10 forms a clamping interval. A force-bearing sideline 211 is formed on a side of the force-bearing surface 21 away from an inner wall of the connecting portion 10, a clamping distance between the force-bearing sideline 211 and an outer edge of the boss 20 is L, an outer diameter of the boss 20 is D, and L < D. A difference between the anti-disassembly connector in the embodiments and the anti-disassembly connector in the above embodiments mainly is the number of the bosses 20. In some embodiments, only one boss 20 is provided, and a clamping gap is formed between the boss 20 and the peripheral wall of the connecting portion 10 such that clamping and screwing can be convenient, and an anti-disassembly function can be achieved by means of the force-releasing surface 22.

From the above description, it can be seen that the above examples of the disclosure achieve technical effects as follows: an anti-disassembly function is achieved, and convenience of operation is improved.

It should be noted that terms used herein are merely for describing particular embodiments and are not intended to limit illustrative embodiments according to the disclosure. As used herein, singular is also intended to include plural unless the context clearly points out singular or plural. In addition, it should be understood that terms "comprise" and/or "include", used in the description, indicate the presence of features, steps, operations, devices, components and/or combinations of the foregoing.

Unless specifically stated otherwise, relative arrangements, numerical expressions and values of components and steps stated in these examples do not limit the scope of the disclosure. Moreover, it should be understood that sizes of various parts shown in figures are not drawn according to an actual scale for ease of description. Technique, methods and devices known to those of ordinary skill in the related art may not be discussed in detail, but should be considered as part of the authorized description where appropriate. In all instances shown and discussed herein, any specific value should be interpreted as merely illustrative rather than limitative. Thus, other instances of the illustrative examples can have different values. It should be noted that similar numerals and letters denote similar items in the following accompanying drawings, and therefore once a certain item is defined in one figure, it is not required to be further discussed in the subsequent figures.

In the description of the disclosure, it should be understood that orientation or positional relations indicated by orientation words such as "front", "back", "up", "down", "left", "right", "transverse", "vertical", "perpendicular", "horizontal", "top" and "bottom" are generally based on orientation or positional relations shown in the accompanying drawings, and are for the convenience of describing the disclosure and simplifying the description only. Unless otherwise stated, these orientation words do not indicate or imply that devices or elements indicated thereby must have particular orientations or must be constructed and operated in particular orientations and therefore cannot be construed as limiting the scope of protection of the disclosure. Orientation words "inner" and "outer" refer to an interior and an exterior relative to an outline of each component.

For ease of description, spatial relative terms such as "over", "above", "on an upper surface" and "on" can be used herein to describe spatial positional relations of one device or feature with other devices or features as shown in the figures. It should be understood that the spatial relative terms are intended to include different orientations in use or operation in addition to the orientations of the devices described in the figures. For example, if the device in the accompanying drawings is inverted, the device described as "above" or "over" another device or structure would then be positioned "below" or "under" another device or structure. Thus, the illustrative term "above" can include two orientations of "above" and "below." The device can also be located in other different manners (of being rotated by 90 degrees or being located in other orientations), and the spatial relative description used herein is interpreted accordingly.

In addition, it should be noted that use of words such as "first" and "second" to define parts is only for the purpose of conveniently distinguishing corresponding parts. Unless otherwise stated, the above words do not have special meanings, and therefore cannot be understood as limiting the scope of protection of the disclosure.

The examples mentioned above are merely preferred examples of the disclosure, and are not intended to limit the disclosure, and various modifications and changes can be made on the disclosure by those skilled in the art. Any modification, equivalent substitution, improvement, etc. within the spirit and principles of the disclosure should fall within the scope of protection of the disclosure.

## Claims

1. An anti-disassembly connector, comprising:
a connecting portion (10); and
bosses (20), wherein the bosses (20) protrude from an end of the connecting portion (10) or a peripheral wall of the connecting portion (10), the bosses (20) extend along a circumferential edge of the connecting portion (10) or a peripheral wall of the connecting portion (10), each of the bosses (20) has a force-bearing surface (21) and a force-releasing surface (22) that are disposed opposite to each other, at least two bosses (20) are provided, and two bosses (20) are disposed at intervals along the circumferential edge of the connecting portion (10) or the peripheral wall of the connecting portion (10); and
a force-bearing sideline (211) is formed on a side of the force-bearing surface (21) away from the connecting portion (10), a distance between force-bearing sidelines (211) of the two bosses (20) is clamping distance L, an outer diameter of each of the bosses (20) is D, and L < D.

2. The anti-disassembly connector as claimed in claim 1, wherein the force-bearing sideline (211) is parallel to an axis of the connecting portion (10).

3. The anti-disassembly connector as claimed in claim 1, wherein two bosses (20) are provided, and the two bosses (20) are symmetrically disposed at the end of the connecting portion (10) or the peripheral wall of the connecting portion (10).

4. The anti-disassembly connector as claimed in claim 1, wherein each of the bosses (20) has a height of h, and 5 mm ≤ h ≤ 20 mm.

5. The anti-disassembly connector as claimed in claim 1, wherein the force-bearing surface (21) is parallel to an axis of the connecting portion (10).

6. The anti-disassembly connector as claimed in claim 1, wherein the force-releasing surface (22) is an inclined surface or a curved surface.

7. The anti-disassembly connector as claimed in claim 1, wherein the force-releasing surface (22) is disposed along the circumferential edge of the connecting portion (10) or the peripheral wall of the connecting portion (10), a central angle corresponding to the force-releasing surface (22) is α, and 40° ≤ α ≤ 180°.

8. The anti-disassembly connector as claimed in claim 1, wherein each of the bosses (20) comprises a first protruding section (23) and a second protruding section (24) that are connected with each other, the force-bearing surface (21) is formed on a side of the first protruding section (23) away from the second protruding section (24), and the force-releasing surface (22) is formed on a side of the second protruding section (24) away from the first protruding section (23); and the first protruding section (23) extends along the circumferential edge of the connecting portion (10) or the peripheral wall of the connecting portion (10), an angle corresponding to the first protruding section (23) is β, and 0° ≤ β ≤ 140°.

9. The anti-disassembly connector as claimed in claim 1, wherein the connecting portion (10) and the bosses (20) are integrally formed; or the bosses (20) are fixed to the connecting portion (10).

10. The anti-disassembly connector as claimed in claim 1, wherein force-bearing surfaces (21) and force-releasing surfaces (22) are alternately disposed in a circumferential direction of an end face of the connecting portion (10) or the peripheral wall of the connecting portion (10).

11. An anti-disassembly connector, comprising:
a connecting portion (10); and
boss (20), wherein the boss (20) protrudes from an end of the connecting portion (10) or a peripheral wall of the connecting portion (10), the boss (20) extends along a circumferential edge of the connecting portion (10) or the peripheral wall of the connecting portion (10), the boss (20) has a force-bearing surface (21) and a force-releasing surface (22) that are disposed opposite to each other, at least one boss (20) is provided, and a gap between the boss (20) and the peripheral wall of the connecting portion (10) forms a clamping interval; and
a force-bearing sideline (211) is formed on a side of the force-bearing surface (21) away from an inner wall of the connecting portion (10), a clamping distance between the force-bearing sideline and an outer edge of the boss (20) is L, an outer diameter of the boss (20) is D, and L < D.
